# EUROPEAN PATENT APPLICATION

(11) **EP 4 635 995 A1**
(43) Date of publication of application: **22.10.2025**
(21) Application number: 22889066.1
(22) Date of filing: 11.10.2022
(51) Int. Cl.: C08F 214/26, C08F 293/00, C08F 216/14, C08F 2/00

(54) **HIGH-TEMPERATURE-RESISTANT PERFLUOROETHER FLUORORUBBER AND PREPARATION METHOD THEREFOR**

(30) Priority: 04.11.2021 CN 202111302034
(71) Applicant: Zhonghao Chenguang Research Institute of Chemical Industry Co., Ltd., Zigong, Sichuan 643201 (CN)
(72) Inventor: LIU, Bo, Zigong, Sichuan 643201 (CN); YU, Jinlong, Zigong, Sichuan 643201 (CN); XIAO, Zhongliang, Zigong, Sichuan 643201 (CN); ZHANG, Tingjian, Zigong, Sichuan 643201 (CN); ZHONG, Ziqiang, Zigong, Sichuan 643201 (CN); LIN, Zhoujun, Zigong, Sichuan 643201 (CN)
(74) Representative: Dilg, Haeusler, Schindelmann Patentanwaltsgesellschaft mbH
(86) International application number: PCT/CN2022/124635
(87) International publication number: WO 2023/078040

(57) **Abstract**

The present application provides a high-temperature-resistant perfluoroether fluororubber and a preparation method therefor. The perfluoroether fluoronubber is in chain segment distribution of A-B, wherein chain segment A is formed by polymerizing tetrafluoroethylene and perfluoroalkyl vinyl ether in a first molar ratio of (75-85) : (15-25), chain segment B is formed by polymerizing tetrafluoroethylene and perfluoroalkyl vinyl ether in a second molar ratio of (45-60) : (40-55), and chain segment B accounts for 35-45% of the total molar weight of chain segment A and chain segment B. The perfluoroether fluororubber of the present application can withstand a high temperature of 300°C, has low hardness and pressure change, and has good medium resistance and processability.

## Description

### Cross Reference

The present application claims priority to Chinese Patent Application No. 202111302034.2, filed on November 4, 2021, entitled "HIGH-TEMPERATURE-RESISTANT PERFLUOROETHER FLUORORUBBER AND PREPARATION METHOD THEREFOR", the entire disclosure of which is incorporated herein by reference.

### Technical Field

The present application relates to the technical field of polymer materials, particularly to a high-temperature-resistant perfluoroether fluororubber and preparation method therefor.

### Background Art

High-temperature perfluoroether fluororubber mainly uses tetrafluoroethylene (TFE) and perfluoroalkyl vinyl ether (PAVE) as the main copolymerization monomers, and uses cyano-containing perfluoroalkenes, bromine-containing or iodine-containing alkenes, and dienes as vulcanization point monomers for copolymerization. Currently, high-temperature perfluoroether fluororubber has been industrialized by foreign companies such as DuPont, Daikin, Solvay, and 3M. The high-temperature-resistant perfluoroether fluororubber has a TFE/PAVE molar ratio of (55-75) : (25-35), and the resulting product can withstand a high temperature of 300°C and more than 1600 known organic or inorganic solvents, is highly favored by industries such as petrochemicals and semiconductors, and has a Tg of about -2°C to 0°C.

A patent CN110713564A reports a synthesis method of a wide temperature range perfluoroether rubber and the perfluoroether rubber, which can only be used in a high temperature environment below 250°C and cannot meet the requirements of an excessively high temperature environment.

Patents CN107868163A and CN1120343 report a preparation method of perfluoroether elastomers, but the prepared perfluoroether elastomers cannot meet the high-temperature-resistant performance.

USP 4487903 relates to preparation of a fluorine-containing elastomer copolymer using perfluorovinyl ether of the following formula I, wherein TFE is used to copolymerize with PAVE. Due to the addition of PAVE monomer in the polymerization system, the polymerization time is as long as 96 hours, which is very unfavorable for production.

Formula I: CF₂=CF-(O-CF₂)ₙ-CF₃(n=3-5)

### Summary of the Application

In this regard, the present application provides a high-temperature-resistant perfluoroether fluororubber and preparation method therefor.

Specifically, the present application provides a high-temperature-resistant perfluoroether fluororubber, the perfluoroether fluoronubber being in chain segment distribution of A-B, wherein:
the chain segment A is formed by polymerizing tetrafluoroethylene and perfluoroalkyl vinyl ether (PAVE) in a first molar ratio of (75-85) : (15-25);
the chain segment B is formed by polymerizing tetrafluoroethylene and PAVE in a second molar ratio of (45-60) : (40-55); and
the molar amount of the chain segment B accounts for 35% to 45% of the total molar amount of the chain segment A and the chain segment B.

The inventor has found that by optimizing the chain segment A, the chain segment B, and the molar ratio of the chain segment A to the chain segment B as described above, the perfluoroether fluororubber can have improved high temperature resistance (it can withstand a high temperature of 300°C), meanwhile, have relatively low hardness and compression deformation, as well as good medium resistance and processibility.

Preferably, the perfluoroalkyl vinyl ether is one or two selected from perfluoroethyl vinyl ether (PEVE) and perfluoropropyl vinyl ether (PPVE).

The present application provides a preparation method of the above-mentioned high-temperature-resistant perfluoroether fluororubber, comprising the following steps:
performing a first polymerization reaction of tetrafluoroethylene and perfluoroalkyl vinyl ether in the first molar ratio in a system of deionized water, emulsifier, initiator, vulcanization point monomer, and chain transfer agent, and then recovering unreacted monomers; and adding tetrafluoroethylene and perfluoroalkyl vinyl ether in the second molar ratio for a second polymerization reaction, and recovering unreacted monomers, and obtaining the high-temperature-resistant perfluoroether fluororubber.

Preferably, the first polymerization reaction is performed at a temperature of 80°C to 90°C under a pressure of 2.0 to 3.0 Mpa; and the second polymerization reaction is performed at a temperature of 80°C to 90°C under a pressure of 1.5 to 2.0 Mpa.

Preferably, the emulsifier is perfluorooctanoate salts, and the salts are ammonium salt, sodium salt, or potassium salt; and a usage amount of the emulsifier is 0.01% to 5% of the total feed mass of monomers.

Preferably, the initiator is selected from ammonium persulfate and/or potassium persulfate; and a usage amount of the initiator is 0.01% to 8% of the total feed mass of monomers.

Preferably, the chain transfer agent is perfluoroalkyl iodide, preferably 1,2-diiodoperfluoroethane and/or 1,4-diiodoperfluorobutane; and a usage amount of the chain transfer agent is 0.01% to 5% of the total feed mass of monomers.

Preferably, the vulcanization point monomer is a perfluoromethylene diene; and a usage amount of the vulcanization point monomer is 0.3% to 5% of the total feed mass of monomers.

Preferably, the perfluoromethylene diene is CH₂=CH-(CF₂)ₙ-CH=CH₂, wherein n is an integer from 2 to 6. The inventor has further found that the above-mentioned vulcanization point monomer enables perfluoroether elastomers to be crosslinked and vulcanized using a peroxide vulcanization system, meanwhile, the iodine atoms at the rubber endpoints are easily removed under the action of free radicals, which is beneficial for promoting peroxide vulcanization. Moreover, the above-mentioned vulcanization point monomer is beneficial for improving the processing flowability of perfluoroether fluororubber.

In some specific embodiments, the preparation method of the high-temperature-resistant perfluoroether fluororubber comprises the following steps:
1) adding deionized water to a reaction vessel, removing the air inside the reaction vessel, adding emulsifier to the reaction vessel, then raising temperature to 80°C to 90°C, then adding first mixed monomers of tetrafluoroethylene and perfluoroalkyl vinyl ether in the first molar ratio, and raising the pressure inside the vessel to 2.0 to 3.0 Mpa, adding initiator, vulcanization point monomer, and chain transfer agent for performing polymerization reaction, continuously adding the first mixed monomers while maintaining the temperature at 80°C to 90°C and pressure at 2.0 to 3.0 Mpa inside the vessel, terminating reaction when the addition amount of the first mixed monomers is 55% to 65% of the total feed amount, and recovering unreacted monomers;
2) then adding second mixed monomers of tetrafluoroethylene and perfluoroalkyl vinyl ether in the second molar ratio, and raising the pressure inside the vessel to 1.5 to 2.0 Mpa, terminating reaction when the addition amount of the second mixed monomers is 35% to 45% of the total feed amount, and recovering unreacted monomers, and obtaining an emulsion; and
3) subjecting the emulsion to electrolytic coagulation, then washing and drying to obtain the high-temperature-resistant perfluoroether fluororubber.

Preferably, the coagulation, washing, and drying of the present application are carried out using conventional processes in the field.

Based on the above scheme, the beneficial effects of the present application are as follows:
The perfluoroether fluororubber provided by the present application is in chain segment distribution of A-B, and the polymerization process is divided into two stages: in the first stage, the high-temperature-resistant segment (chain segment A) of the perfluoroether fluororubber is prepared, wherein the molecular chain of the chain segment A has a relatively high content of TFE monomer, so that the perfluoroether rubber has high temperature resistance; in the second stage, the rubber segment (chain segment B) of the perfluoroether fluororubber is prepared, and the prepared high-temperature-resistant perfluoroether fluororubber emulsion is subjected to coagulation, washing, and drying to obtain a high-temperature-resistant perfluoroether fluororubber product that can withstand a high temperature of 300°C, and has relatively low hardness and compression deformation, and good medium resistance and processibility.

### Specific Modes for Carrying Out the Embodiments

The following Examples are used to illustrate the present application, but not to limit the scope of the present application.

If specific technology or conditions are not specified in the Examples, follow the technology or conditions described in the literatures in this field, or follow the product manual. The reagents or instruments used without specifying the manufacturer are conventional products that can be purchased through legitimate channels.

### Example 1

The present Example provides a preparation method of a high-temperature-resistant perfluoroether fluororubber, comprising the following steps:
1) 30 L of deionized water were added to a 50 L reaction vessel, and the reaction vessel was evacuated until the oxygen content is ≤ 30 ppm;
2) 35 g of ammonium perfluorooctanoate were added to the reaction vessel, the temperature was raised to 90°C, then mixed monomers of TFE/PEVE=80/20 (molar ratio) were added, the pressure inside the reaction vessel was raised to 2.8 MPa, 15 g of potassium persulfate, 25 g of 1,2-diiodoperfluoroethane, and 60 g of CH₂=CH-(CF₂)₆-CH=CH₂ were added for polymerization reaction, and reaction was terminated when the addition amount of mixed monomers reaches 6.4 kg;
3) unreacted monomers were quickly recovered until the gauge pressure inside the vessel reaches 0 KPa, mixed monomers of TFE/PEVE=45/55 (molar ratio) were added to the reaction vessel, the pressure inside the reaction vessel was raised to 1.6 MPa, and reaction was terminated when the addition amount of reactant monomers reaches 3.6 kg;
4) unreacted monomers were recovered, and a high-temperature-resistant perfluoroether fluororubber emulsion was obtained, nitric acid was added for coagulation, the resultant was washed with deionized water, dried at a temperature of 110°C and a vacuum degree of -85 Kpa for 10 h to obtain 10.0 Kg of a high-temperature-resistant perfluoroether fluororubber product.

The performance of the prepared high-temperature-resistant perfluoroether fluororubber was tested, and the results were as follows:
The molar ratio of chain segment A to chain segment B is 64 : 36, the Mooney viscosity is 82, the fluorine content is 72.6%, the tensile strength is 28.6 MPa, the elongation is 120%, the hardness is 82 Ha, the compression deformation is 18%, and after withstanding 310°C × 70 h, the strength is 27.5 MPa and the elongation is 110%.

### Example 2

The present Example provides a preparation method of a high-temperature-resistant perfluoroether fluororubber, comprising the following steps:
1) 30 L of deionized water were added to a 50 L reaction vessel, and the reaction vessel was evacuated until the oxygen content is ≤ 30 ppm;
2) 35 g of ammonium perfluorooctanoate were added to the reaction vessel, the temperature was raised to 85°C, then mixed monomers of TFE/PPVE=76/24 (molar ratio) were added, the pressure inside the reaction vessel was raised to 2.5 MPa, 36 g of potassium persulfate, 30 g of 1,2-diiodoperfluorobutane, and 80 g of CH₂=CH-(CF₂)₆-CH=CH₂ were added for polymerization reaction, and reaction was terminated when the addition amount of mixed monomers reaches 6.8 kg;
3) unreacted monomers were quickly recovered until the gauge pressure inside the vessel reaches 0 KPa, mixed monomers of TFE/PPVE=45/55 (molar ratio) were added to the reaction vessel, the pressure inside the reaction vessel was raised to 1.8 MPa, and reaction was terminated when the addition amount of reactant monomers reaches 4.0 kg;
4) unreacted monomers were recovered, and a high-temperature-resistant perfluoroether fluororubber emulsion was obtained, nitric acid was added for coagulation, the resultant was washed with deionized water, driedat a temperature of 110°C and a vacuum degree of -85 Kpa for 10 h to obtain 10.2 Kg of a high-temperature-resistant perfluoroether fluororubber product.

The performance of the prepared high-temperature-resistant perfluoroether fluororubber was tested, and the results were as follows:
The molar ratio of chain segment A to chain segment B is 60 : 40, the Mooney viscosity is 65, the fluorine content is 72.2%, the tensile strength is 29.2 MPa, the elongation is 130%, the hardness is 80 Ha, the compression deformation is 20%, and after withstanding 310°C × 70 h, the strength is 27.7 MPa and the elongation is 130%.

### Example 3

The present Example provides a preparation method of a high-temperature-resistant perfluoroether fluororubber, comprising the following steps:
1) 30 L of deionized water were added to a 50 L reaction vessel, and the reaction vessel was evacuated until the oxygen content is ≤ 30 ppm;
2) 35 g of ammonium perfluorooctanoate were added to the reaction vessel, the temperature was raised to 82°C, then mixed monomers of TFE/PPVE=82/18 (molar ratio) were added, the pressure inside the reaction vessel was raised to 2.0 MPa, 55 g of potassium persulfate, 45 g of 1,2-diiodoperfluorobutane, and 100 g of CH₂=CH-(CF₂)₆-CH=CH₂ were added for polymerization reaction, and reaction was terminated when the addition amount of mixed monomers reaches 7.0 kg;
3) unreacted monomers were quickly recovered until the gauge pressure inside the vessel reaches 0 KPa, mixed monomers of TFE/PPVE=58/42 (molar ratio) were added to the reaction vessel, the pressure inside the reaction vessel was raised to 1.6 MPa, and reaction was terminated when the addition amount of reactant monomers reaches 3.8 kg;
4) unreacted monomers were recovered, and a high-temperature-resistant perfluoroether fluororubber emulsion was obtained, nitric acid was added for coagulation, the resultant was washed with deionized water, dried at a temperature of 110°C and a vacuum degree of -85 Kpa for 10 h to obtain 10.5 Kg of a high-temperature-resistant perfluoroether fluororubber product.

The performance of the prepared high-temperature-resistant perfluoroether fluororubber was tested, and the results were as follows:
The molar ratio of chain segment A to chain segment B is 58 : 42, the Mooney viscosity is 52, the fluorine content is 72.6%, the tensile strength is 30.7 MPa, the elongation is 110%, the hardness is 78 Ha, the compression deformation is 17%, and after withstanding 310°C × 70 h, the strength is 29.5 MPa and the elongation is 110%.

### Comparative Example 1

The present Comparative Example provides a preparation method of a perfluoroether fluororubber, which is the same as Example 1 only except that in step 2), mixed monomers of TFE/PEVE=65/35 (molar ratio) were added to the reaction vessel.

The molar ratio of chain segment A to chain segment B in the obtained product is 45 : 55, the Mooney viscosity is 81, the fluorine content is 72.5%, the tensile strength is 27.5 MPa, the elongation is 130%, the hardness is 80 Ha, the compression deformation is 18%, and after withstanding 310°C × 70 h, the strength is 16.2 MPa and, the elongation is 90%.

### Comparative Example 2

The present Comparative Example provides a preparation method of a perfluoroether fluororubber, which is the same as Example 1 only except that the addition amount of mixed monomers is 4.8 kg in step 2), and the addition amount of mixed monomers is 5.3 kg in step 3).

The molar ratio of chain segment A to chain segment B in the obtained product is 43 : 47, the Mooney viscosity is 65, the fluorine content is 72.6%, the tensile strength is 25.0 MPa, the elongation is 130%, the hardness is 78 Ha, the compression deformation is 19%, and after withstanding 310°C × 70 h, the strength is 15.8 MPa and the elongation is 80%.

Finally, it should be noted that the above examples are only used to illustrate the technical solution of the present application, and not to limit it. Although the present application has been described in detail with reference to the aforementioned examples, a person skilled in the art should understand that they can still modify the technical solutions described in the aforementioned examples, or equivalently replace some of the technical features; and these modifications or replacements do not make the essence of the corresponding technical solutions depart from the spirit and scope of the technical solutions of the examples of the present application.

### Industrial applicability

The present application provides a high-temperature-resistant perfluoroether fluororubber and a preparation method therefor. The perfluoroether fluoronubber is in chain segment distribution of A-B, wherein the chain segment A is formed by polymerizing tetrafluoroethylene and perfluoroalkyl vinyl ether in a first molar ratio of (75-85) : (15-25), the chain segment B is formed by polymerizing tetrafluoroethylene and perfluoroalkyl vinyl ether in a second molar ratio of (45-60) : (40-55), and the chain segment B accounts for 35-45% of the total molar amount of the chain segment A and chain segment B. The perfluoroether fluororubber of the present application can withstand a high temperature of 300°C, has low hardness and compression deformation, good medium resistance and processability, and has good economic value and application prospect.

## Claims

1. A high-temperature-resistant perfluoroether fluororubber, wherein the perfluoroether fluoronubber is in chain segment distribution of A-B, wherein:
the chain segment A is formed by polymerizing tetrafluoroethylene and perfluoroalkyl vinyl ether in a first molar ratio of (75-85) : (15-25);
the chain segment B is formed by polymerizing tetrafluoroethylene and perfluoroalkyl vinyl ether in a second molar ratio of (45-60) : (40-55); and
a molar amount of the chain segment B accounts for 35% to 45% of the total molar amount of the chain segment A and the chain segment B.

2. The high-temperature-resistant perfluoroether fluororubber according to claim 1, wherein the perfluoroalkyl vinyl ether is one or two selected from perfluoroethyl vinyl ether and perfluoropropyl vinyl ether.

3. A preparation method of the high-temperature-resistant perfluoroether fluororubber according to claim 1 or 2, compring the following steps:
performing a first polymerization reaction of tetrafluoroethylene and perfluoroalkyl vinyl ether in the first molar ratio in a system of deionized water, emulsifier, initiator, vulcanization point monomer, and chain transfer agent, and then recovering unreacted monomers; and adding tetrafluoroethylene and perfluoroalkyl vinyl ether in the second molar ratio for a second polymerization reaction, and recovering unreacted monomers, and obtaining the high-temperature-resistant perfluoroether fluororubber.

4. The preparation method according to claim 3, wherein the first polymerization reaction is performed at a temperature of 80°C to 90°C under a pressure of 2.0 to 3.0 Mpa; and the second polymerization reaction is performed at a temperature of 80°C to 90°C under a pressure of 1.5 to 2.0 Mpa.

5. The preparation method according to claim 3 or 4, wherein the emulsifier is perfluorooctanoate salts, and the salts are ammonium salt, sodium salt, or potassium salt; and a usage amount of the emulsifier is 0.01% to 5% of the total feed mass of monomers.

6. The preparation method according to any one of claims 3 to 5, wherein the initiator is selected from ammonium persulfate and/or potassium persulfate; and a usage amount of the initiator is 0.01% to 8% of the total feed mass of monomers.

7. The preparation method according to any one of claims 3 to 6, wherein the chain transfer agent is perfluoroalkyl iodide, preferably 1,2-diiodoperfluoroethane and/or 1,4-diiodoperfluorobutane; and a usage amount of the chain transfer agent is 0.01% to 5% of the total feed mass of monomers.

8. The preparation method according to any one of claims 3 to 7, wherein the vulcanization point monomer is a perfluoromethylene diene; and a usage amount of the vulcanization point monomer is 0.3% to 5% of the total feed mass of monomers.

9. The preparation method according to claim 8, wherein the perfluoromethylene diene is CH₂=CH-(CF₂)ₙ-CH=CH₂, wherein n is an integer from 2 to 6.

10. The preparation method according to any one of claims 3 to 9, wherein the method comprises the following steps:
1) adding deionized water to a reaction vessel, removing the air inside the reaction vessel, adding emulsifier to the reaction vessel, then raising temperature to 80°C to 90°C, then adding first mixed monomers of tetrafluoroethylene and perfluoroalkyl vinyl ether in the first molar ratio, and raising the pressure inside the vessel to 2.0 to 3.0 Mpa, adding the initiator, the vulcanization point monomer, and the chain transfer agent for performing polymerization reaction, continuously adding the first mixed monomers while maintaining the temperature at 80°C to 90°C and pressure at 2.0 to 3.0 Mpa inside the vessel, terminating the reaction when the addition amount of the first mixed monomers is 55% to 65% of the total feed amount, and recovering unreacted monomers;
2) then adding second mixed monomers of tetrafluoroethylene and perfluoroalkyl vinyl ether in the second molar ratio, and raising the pressure inside the vessel to 1.5 to 2.0 Mpa, terminating reaction when the addition amount of the second mixed monomers is 35% to 45% of the total feed amount, recovering unreacted monomers and obtaining an emulsion; and
3) subjecting the emulsion to electrolytic coagulation, then washing and drying to obtain the high-temperature-resistant perfluoroether fluororubber.
